# EUROPÄISCHE PATENTANMELDUNG

(11) **EP 3 984 679 A1**
(43) Veröffentlichungstag der Anmeldung: **20.04.2022**
(21) Anmeldenummer: 20202467.5
(22) Anmeldetag: 19.10.2020
(51) Int. Cl.: B23K 9/04, B23K 9/173, B23K 9/32, B22F 10/00, B22F 12/00, B23K 9/23, B23K 103/10

(54) **VERFAHREN UND VORRICHTUNG ZUR HERSTELLUNG EINES WERKSTÜCKES MITTELS EINES ADDITIVEN FERTIGUNGSPROZESSES**

(71) Anmelder: Siemens Aktiengesellschaft, 80333 München (DE)
(72) Erfinder: Hauser, Tobias, 89347 Bubesheim (DE); Reisch, Raven Thomas, 81379 München (DE); Breese, Philipp Peter, 81373 München (DE); Lutz, Benjamin Samuel, 81739 München (DE); Kamps, Tobias, 80538 München (DE); Pantano, Matteo, 81737 München (DE)

(57) **Zusammenfassung**

Die Erfindung betrifft ein Verfahren zu Herstellung eines Werkstückes mittels eines additiven Fertigungsprozesses (3), umfassend folgende Schritte:
- Erzeugen einer ersten Materialschicht aus einem Fertigungsmaterial in einem ersten Auftragsschritt (6),
- Aufnahme eines Oberflächenbildes der Materialschicht mittels einer Kamera (10),
- Durchführung einer Bildanalyse (12) des Oberflächenbildes und Bestimmung eines Rauigkeitskennwert (X) der Oberfläche,
- Abgleich des bestimmten Rauigkeitskennwerts (X) mit einem gespeicherten Rauigkeitsgrenzwert (R),
- Freigabe eines zweiten Auftragsschritts, wenn der bestimmte Rauigkeitskennwert (X) den gespeicherten Rauigkeitsgrenzwert (R) überschreitet.

## Beschreibung

Im additiven Fertigungsverfahren, sowie beim Schweißen, sind Poren eine der meistaufkommenden Anomalien in Bauteilen und in Schweißnähten. Die Porosität verringert die Gesamtdichte der hergestellten Teile und reduziert die mechanischen Eigenschaften wie zum Beispiel die Zugfestigkeit der hergestellten Komponenten. Daher versucht man, die Porosität immer möglichst gering zu halten. Poren sind Gaseinschlüsse im Materialvolumen, welche hauptsächlich durch eine zu schnelle Verfestigung des Materials oder durch Wassterstoffeinschlüsse erfolgen. Sobald die Porosität in einem gewissen Bereich des Bauteils einen Grenzwert überschreitet, weist es nicht mehr die nötigen mechanischen Eigenschaften auf und ist damit als Ausschuss anzusehen. Dies wird bisher immer erst nach der Anfertigung eines Bauteils festgestellt, was die Produktkosten durch eine entsprechende Ausschussquote signifikant steigern kann. Da additiv gefertigte Bauteile oft in kleinen Losgrößen hergestellt werden, steigen die Kosten bei Ausschuss hierbei noch überproportional an.

Vor allem Aluminium ist für eine hohe Porosität anfällig, da das Material eine hohe Wärmeleitfähigkeit aufweist, wodurch es sehr schnell erstarrt und die Gaseinschlüsse nicht aus dem Schmelzbad entweichen können. Gaseinschlüsse sind charakteristisch für Lichtbogen-Drahtschweißverfahren, die im Englischen "Gas Metal Arc Welding" GMAW genannt werden. Das additive Fertigungsverfahren ist das sogenannte "Wire-Arc-Additive-Manufacturing" WAAM, welches auf GMAW basiert. Die Poren können durch eingebrachtes Schutzgas, durch Luft, Wasserstoff oder weitere Gase verursacht werden. Eine weitere Prozessanomalie, welche im WAAM von Aluminium auftritt, ist die Oxidation. Oxidation entsteht durch einen zu hohen Restsauerstoffgehalt im Prozess. Oxidationsprozesse während der Herstellung von additiv hergestellten Materialien führen ebenfalls zu Eigenschaftsveränderungen, die am Bauteil unerwünscht sind.

Bisher wurden Aluminiumbauteile immer erst nach der Anfertigung des Bauteils durch zerstörungsfreie Prüfverfahren auf Fehlstellen bzw. auf zu hohe Porosität und Oxidation geprüft. Es werden beispielsweise Ultraschall- oder Röntgenstrahlverfahren genutzt. Durch diese Lösung ist stets erst nach der Fertigstellung des Bauteils bzw. eines Halbzeuges die Beurteilung über dessen Qualität möglich. Wie bereits erwähnt, ist es aus wirtschaftlichen Gründen insbesondere bei additiven Fertigungsverfahren besonders wichtig, die Ausschussquote so klein wie möglich zu halten. Ferner ist es anzustreben, die Qualitätssicherungsprozesse nach dem Produktionszyklus so kurz und so unaufwändig wie möglich zu gestalten.

Die Aufgabe der Erfindung besteht darin, ein Verfahren zur Herstellung eines Werkstücks mittels eines additiven Fertigungsprozesses mit einer Qualitätssicherung bereitzustellen, das dazu führt, dass gegenüber dem Stand der Technik eine geringere Ausschussquote bei geringeren Qualitätssicherungsaufwendungen ermöglicht wird. Ferner ist eine entsprechende Vorrichtung zur Durchführung eines Verfahrens zur Herstellung eines Werkstückes bereitzustellen.

Die Lösung der Aufgabe besteht in einem Verfahren zur Herstellung eines Werkstückes mittels eines additiven Fertigungsprozesses mit den Merkmalen des Patentanspruchs 1 sowie in einer Vorrichtung zur Herstellung eines Werkstückes nach Patenanspruch 10.

Das Verfahren zur Herstellung eines Werkstückes mittels eines additiven Fertigungsprozesses gemäß Patentanspruch 1 umfasst folgende Schritte:
- Zunächst wird eine erste Materialschicht aus einem Fertigungsmaterial in einem ersten Auftragsschritt erzeugt.
- Es wird ein Oberflächenbild der Materialschichten mittels einer Kamera aufgenommen.
- Im Weiteren wird eine Bildanalyse des Oberflächenbildes durchgeführt und ein Rauigkeitskennwert der Oberfläche bestimmt.
- Daraufhin erfolgt ein Abgleich des bestimmten Rauigkeitskennwertes mit einem gespeicherten Rauigkeitsgrenzwert.
- Wenn der Rauigkeitskennwert größer ist als der gespeicherte Rauigkeitsgrenzwert, wird ein zweiter Auftragungsschritt für eine zweite Materialschicht freigegeben.

Der Erfindung liegt die überraschende Erkenntnis zugrunde, dass eine besonders raue Oberfläche dieser ersten Materialschicht auf eine geringere Porosität im Materialinneren schließen lässt. Eine hohe Rauigkeit, also auch ein hoher Rauigkeitskennwert, der sich insbesondere durch eine Vielzahl von Kavitäten an der Oberfläche der Materialschicht auszeichnet, lässt auf ein hohes Maß an Gasaustritten an der Oberfläche während der Produktion bzw. des Aufbringens der Schicht schließen. Gasaustritte aus dem gerade erstarrenden Material führen zu kleinen Kratern, die als Kavitäten bezeichnet werden. Damit steigt der Rauigkeitskennwert. Im Weiteren kann daraus geschlossen werden, dass bei einem hohen Gasaustritt die Anzahl der Poren im Materialinneren geringer wird, da das entsprechende, die Poren bildende und füllende Gas bereits erfolgreich aus dem erstarrenden Material ausgetreten ist. Bei Probenuntersuchungen kann bei Aufnahme von einer Vielzahl von Rauigkeitskennwerten und der anschließenden Bestimmung der Porenzahl ein Rauigkeitsgrenzwert bestimmt werden, also eine Anzahl von Kavitäten auf der Materialoberfläche, die mit einer unkritischen Porendichte im Inneren des Materials korreliert.

Das heißt, es wird empirisch festgelegt, wie die Oberflächenrauigkeit bei einer gerade noch akzeptablen Porenmenge bzw. Porendichte oder Porengrößenverhältnis ausschaut und vergleicht sie mit der gerade vorliegenden Rauigkeit. Wenn die aktuell gemessene Rauigkeit auf der Oberfläche, also der Rauigkeitskennwert, größer ist als der gespeicherte Rauigkeitsgrenzwert, dann weist die gerade aufgebrachte Materialschicht eine ausreichende Qualität auf und ein weiterer Schritt zum Auftragen einer weiteren Schicht kann eingeleitet werden.

Dabei ist bezüglich des Rauigkeitskennwertes und des Rauigkeitsgrenzwertes anzumerken, dass es sich hierbei in der Regel nicht um eine einfache Zahl oder sogar eine natürliche Zahl handeln muss, sondern dass diesem Kennwert ein komplexes computerunterstütztes Auswerteverfahren zugrundeliegen kann. Die Anzahl und Größe der schwarzen Punkte, also der Kavitäten, können beispielsweise per Computervision oder ein neuronales Netzwerk, zum Beispiel per Autoencoder oder Convolutional Neural Network (CNN), überwacht werden. Dabei kann es sich einerseits um eine gezielte Erkennung der offenen Kavitäten handeln, zum Beispiel durch Canny Edge Detektoren oder einen Bildsegmentierungsalgoritmus durch CNNs mit zum Beispiel Link Net- oder UNet-Architektur oder andererseits um Methoden zur Rekonstruktion des Bildes und Erkennung von Abweichungen, zum Beispiel durch Autoencoder, handeln. Dadurch ergibt sich eine relative Aussage über die Poren in der aufgetragenen Schicht, was man wiederum für einen Rauigkeitsgrenzwert nutzen kann.

Des Weiteren ist anzumerken, dass der Begriff erste Materialschicht sich auf eine erste beobachtete Materialschicht bezieht. Dieser beobachteten ersten Materialschicht können schon weitere Materialschichten ähnlicher Art zugrundeliegen. Die zweite Materialschicht im zweiten Auftragsschritt ist dementsprechend die darauffolgende Materialschicht. Alle Materialschichten zusammen bilden dann ein entsprechendes Werkstück, das wiederum auch ein Halbzeug sein kann.

Der Vorteil des beschriebenen Verfahrens besteht darin, dass in situ, also während des Prozesses, konstant die Qualität jedes einzelnen Arbeitsschrittes überprüft werden kann. Dies unterscheidet sich zum Stand der Technik, in dem erst fertige Bauteile und Halbzeuge überprüft werden und mögliche Fehler während des Produktionsprozesses zu spät bemerkt werden.

Besonders geeignet ist die Anwendung des beschriebenen Verfahrens bei additiven Fertigungsprozessen, die auf Lichtbogendrahtschweiß-Verfahren basieren. Dies liegt daran, dass insbesondere bei derartigen Auftragsprozessen besonders viele Poren auftreten können.

Ein weiterer Vorteil des beschriebenen Verfahrens besteht auch darin, dass bei Unterschreiten des Rauigkeitsgrenzwertes eine Prozesskorrekturmaßnahme ebenfalls in situ durchgeführt werden kann. Diese Prozesskorrekturmaßnahme kann beispielsweise und bevorzugt durch einen mechanischen Abtrageprozess der ersten Materialschicht erfolgen. Dabei ist es zweckmäßig, diesen Abtragungsprozess so weit durchzuführen, wie es prozesstechnisch zweckmäßig ist, um die Anzahl der Poren gering zu halten. Ein teilweises Abtragen der ersten Materialschicht kann dabei ausreichend sein. Als mechanisches Abtragungsverfahren kann beispielsweise ein Fräsprozess durchgeführt werden.

Eine zweite bevorzugte und zweckmäßige Prozesskorrekturmaßnahme kann in der Anpassung eines Schutzgasstromes bestehen. Insbesondere Oxidationsprozesse, die ebenfalls die Qualität des Bauteils negativ beeinflussen können, können auf einen unzureichenden oder unregelmäßigen Schutzgasstrom hindeuten. Zur Ermittlung von Oxidationsvorgängen ist es grundsätzlich zweckmäßig, neben der Kamera auch ein Spektrometer zur Detektierung der Oberfläche und besonderer Oberflächeneigenschaften wie Oxidationsvorgänge einzusetzen. Bei Detektion von Oxidationsprozessen kann der Schutzgasstrom entsprechend angepasst werden. Auch hier ist es zweckmäßig, ggf. Teile der zuletzt aufgebrachten Materialschicht, also der ersten Materialschicht, abzutragen.

Eine weitere zweckmäßige Prozesskorrekturmaßnahme kann die Anpassung der Prozessspannung am additiven Fertigungsprozess sein. Insbesondere die Anpassung der Prozessspannung eines Schweißlichtbogens kann dazu geeignet sein, frühzeitig Oxidationsprozesse zu unterbinden. Auch die Beobachtung der Prozessspannung und der Prozessstromstärke kann auf Unregelmäßigkeiten bei der Prozessführung und auf Oxidationsprozesse hindeuten.

Ferner ist es zweckmäßig, wenn mittels einer Laserlichtquelle eine Beleuchtungszeit der Oberfläche der Materialschicht und eine Verschlusszeit der Kamera derart gesteuert werden, dass eine Beleuchtung der Oberfläche durch den Schweißlichtbogen kompensiert wird.

Ein weiterer Bestandteil der Erfindung ist eine Vorrichtung zur Herstellung eines Werkstücks mittels eines additiven Lichtbogendrahtschweißprozesses. Diese Vorrichtung umfasst folgende Merkmale:
- einen Lichtbogendrahtschweißroboter mit einem Roboterarm
- an dem eine Lichtbogendrahtschweißvorrichtung mit einer Schweißbrenner montiert ist, und
- eine Kameravorrichtung mit einer Kamera, die ebenfalls an dem Roboterarm angebracht ist und die bezüglich der Lichtbogendrahtschweißvorrichtung simultan verfahrbar ist, wobei die Kamera dabei auf eine Position gerichtet ist, die mit einem Wirkbereich Bereich des Schweißbrenners zusammenfällt.
- Ferner ist eine Bildauswertungsvorrichtung zur in-situ-Auswertung von Oberflächenbildern des Werkstückes vorgesehen, die von der Kamera aufgenommen sind.
- Ferner umfasst die Vorrichtung eine Steuervorrichtung, die mit der Bildauswertevorrichtung in Verbindung steht.

Die beschriebene Vorrichtung weist im Wesentlichen dieselben Vorteile auf, die bereits bezüglich des erfindungsgemäßen Verfahrens beschrieben sind. Insbesondere ist es mittels dieser Vorrichtung möglich, in situ auf mögliche Prozessmängel einzugehen und diese, wenn nötig, gleichzeitig zu korrigieren. Dabei ist es nicht nötig, ein Werkstück fertig zu produzieren, um anschließend eine Werkstoffprüfung vorzunehmen. Die Ausschussrate von Werkstücken, die mit der beschriebenen Vorrichtung hergestellt sind, wird gegenüber herkömmlichen additiv hergestellten Werkstücken erheblich reduziert.

Im Weiteren ist es zweckmäßig, dass die beschriebene Vorrichtung eine Materialabtragungsvorrichtung zur Abtragung zumindest von Teilen einer Materialschicht aufweist. Eine derartige Materialabtragungsvorrichtung kann beispielsweise eine Fräsvorrichtung sein. Diese Fräsvorrichtung kann beispielsweise am selben Roboterarm angeordnet sein und durch Wechseln des Werkzeuges von der Drahtschweißvorrichtung zur Fräsvorrichtung aufrüstbar sein.

In einer weiteren vorteilhaften Ausgestaltung der Erfindung sind an der Lichtbogendrahtschweißvorrichtung eine Spannungsmessvorrichtung und eine Spannungsregelungsvorrichtung zur Messung und Regelung einer Lichtbogenspannung U vorgesehen. Diese steht in Verbindung mit der Steuervorrichtung. Auf diese Weise kann auf ggf. detektierte Oxidationsprozesse an der Oberfläche des Werkstücks durch Änderung der Prozessspannung, aber auch des Prozessstromes, Einfluss genommen werden.

In einer weiteren Ausgestaltungsform der Erfindung weist die Lichtbogendrahtschweißvorrichtung eine Schutzgasregelvorrichtung auf, die in Verbindung mit der Steuervorrichtung steht. Auch hierdurch kann auf Oxidationsprozesse, die ggf. während des Prozesses wie bereits beschrieben detektiert sind, durch Änderung am Schutzgasstrom Einfluss genommen werden.

Zudem besteht eine vorteilhafte Ausgestaltung der Vorrichtung darin, dass die Kameravorrichtung neben der Kamera eine Laserlichtquelle aufweist, wobei ein elektrischer Verschluss der Kamera mit einem elektrischen Verschluss der Laserlichtquelle in der Art synchronisiert ist, dass eine Belichtungszeit von weniger als 10⁻⁵ s auftritt. Bei einer derart kurzen Belichtung ist gewährleistet, dass das von der Kamera aufgenommene Bild nicht überbelichtet ist. Die Laserlichtquelle mit einem kurzen Impuls, der ebenfalls in diesem Bereich von 10⁻⁵ s liegt, kann zur gezielten Ausleuchtung des betrachteten Punktes beitragen. Unter einer Kamera wird dabei ein Gerät verstanden, das einen Detektor zur Aufnahme von elektromagnetischen jeder Wellenlänge, bevorzugt sichtbares Licht, UV-Licht und/oder Infrarotlicht umfasst.

Weitere Ausgestaltungsformen und weitere Merkmale der Erfindung werden anhand der folgenden Figuren näher beschrieben. Dabei handelt es sich um schematische Ausgestaltungsformen, die keine Einschränkung des Schutzbereichs darstellen. Dabei zeigen:
- Figur 1: eine dreidimensionale schematische Darstellung eines Lichtbogendrahtschweißroboters mit einer entsprechenden Kameravorrichtung,
- Figur 2: eine schematische Darstellung eines Schnittes durch ein Werkstück (links) und das dazugehörige Oberflächenbild (rechts) mit mehr Poren- (oben) und weniger Porenbelastung (unten),
- Figur 3: einen schematischen Ablauf des Produktionsprozesses mit Qualitätskontrolle,
- Figur 4: eine schematische Darstellung der Veränderung der Intensität eines Spektrometers bei auftretenden Oxidationsprozessen und
- Figur 5: eine schematische Darstellung der Änderung der Lichtbogenspannung und des Lichtbogenstromes bei auftretenden Oxidationsprozessen.

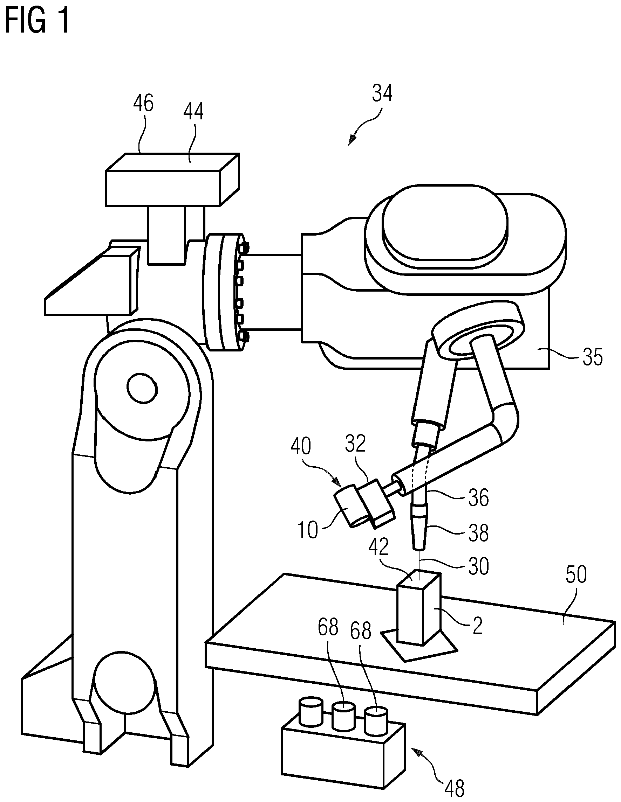

In Figur 1 ist schematisch eine Vorrichtung zur additiven Fertigung von Werkstücken 2 dargestellt. Dabei handelt es sich um einen Lichtbogendrahtschweißroboter 34, der einen Roboterarm 35 aufweist, an dem eine Lichtbogendrahtschweißvorrichtung 36 mit einer Lichtbogendrahtschweißdüse 38 angeordnet ist. Ferner ist an dem Roboterarm 35 eine Kameravorrichtung 40 angeordnet, die wiederum eine Kamera 10 sowie eine Laserlichtquelle 32 umfasst. Auf einem Werktisch 50 ist dabei ein sich in Produktion befindliches Werkstück 2 angeordnet, das nicht Bestandteil der Vorrichtung 34 ist. Das Werkstück 2 wird dabei additiv in verschiedenen Schichten aufgetragen. Dabei wird zunächst eine erste Materialschicht 4 betrachtet, die in einem ersten Auftragsschritt 6 aufgetragen wird. Dabei handelt es sich bei der ersten Materialschicht lediglich um die erste betrachtete Materialschicht, der schon eine Vielzahl weiterer Schichten folgen kann. Die erste Materialschicht 4 weist dabei eine Oberfläche 14 auf, wobei durch die Kamera 10 ein Oberflächenbild 8 dieser Oberfläche 14 aufgenommen wird. Dabei entsteht die Oberfläche 14 während des Lichtbogendrahtschweißens, weshalb während des Prozesses nicht stets von einer Festkörperoberfläche gesprochen werden kann. Daher wird der Bereich, auf den die Kamera 10 mit der Laserlichtquelle 32 gerichtet ist, ganz allgemein als der Wirkbereich 42 der Lichtbogendrahtschweißvorrichtung 36 bzw. der Lichtbogendrahtschweißdüse 38 bezeichnet. In der Regel befindet sich in diesem Wirkbereich 42 eine aufzunehmende Oberfläche eines Werkstücks 2.

Wie in Figur 1 zu erkennen, ist die Kameravorrichtung 40 ebenfalls am Roboterarm 36 befestigt und ist dabei so ausgerichtet, dass sie während eines additiven Fertigungsprozess 3 mit der Lichtbogendrahtschweißvorrichtung 36 bzw. der Lichtbogendrahtschweißdüse 38 simultan und bevorzugt äquidistant verfahrbar ist. Das bedeutet, dass eine (hier nicht dargestellte) Kameralinse bevorzugt stets auf einen Punkt im Wirkbereich 42 der Lichtbogendrahtschweißdüse 38 gerichtet ist, der sich gerade im Herstellungsprozess befindet oder gerade erstarrt ist. Die Kamera nimmt dabei simultan Oberflächenbilder 8 auf, die durch eine Bildauswertungsvorrichtung 44 während des Fertigungsprozesses 3, also in situ, ausgewertet werden. Ferner weist der Lichtbogendrahtschweißroboter 34 eine Steuervorrichtung 46 auf, die beispielhaft in der vorliegenden Figur 1 in einem integrierten Kasten zusammen mit der Bildauswertevorrichtung 44 angeordnet ist. Beide Vorrichtungen können selbstverständlich auch in unterschiedlichen Recheneinheiten auch außerhalb des direkten Roboters angeordnet sein.

Ferner ist in Figur 1 schematisch eine Materialabtragungsvorrichtung 48 in Form von Fräsköpfen 68 dargestellt. Diese sind außerhalb des Roboterarmes 35 gelagert und können bei Bedarf, worauf im Weiteren noch eingegangen wird, im Wechsel beispielsweise zur Lichtbogendrahtschweißvorrichtung 36 am Roboterarm aufgenommen werden. Auf diese Weise können als nicht einwandfrei detektierte aufgetragene Schichten 4 des Werkstücks 2 direkt wieder durch den Fräskopf abgetragen werden.

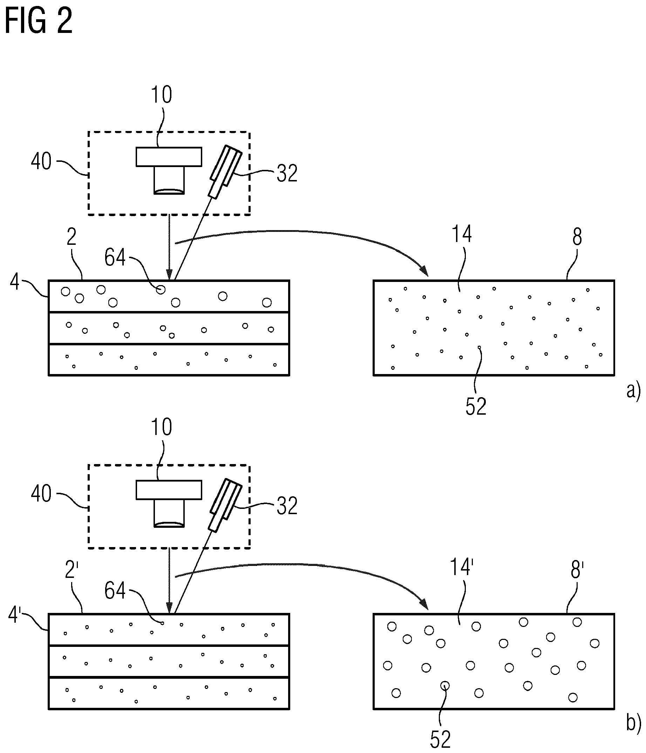

Die in Figur 1 beschriebene Vorrichtung 34 und der damit durchgeführte additive Fertigungsprozess 3 basiert auf der Erkenntnis, die mittels Figur 2 erläutert wird. Im oberen Teilbereich der Figur 2 ist auf der linken Seite ein Schnitt durch ein Werkstück 2 dargestellt, bei dem an seiner Oberseite eine Materialschicht 4 aufgetragen wird, die als erste Materialschicht 4 bezeichnet wird. Dabei handelt es sich um die erste betrachtete Materialschicht, gefolgt ggf. von weiteren Materialschichten, die bereits als fehlerfrei untersucht sind. Eine analoge Darstellung eines Schnittes durch ein Werkstück 2' ist im unteren Teil b der Figur 2 dargestellt. Dies weist eine erste Materialschicht 4' auf. Die Materialschichten 4 und 4' aus den Teilfiguren 2a und 2b unterscheiden sich insbesondere durch ihren Porengehalt. Die Materialschicht 4 weist dabei wesentlich mehr und wesentliche größere Poren 64 auf als die Materialschicht 4'. Die unterschiedlichen Porengehalte in den Schichten 4 und 4' sind in den Querschnittdarstellungen der Figuren 2a und 2b sehr gut zu erkennen, von außen lassen sich diese jedoch nicht ohne Weiteres erkennen. Hierzu müssen besondere Werkstoffprüfverfahren wie beispielsweise Ultraschallverfahren oder Röntgenverfahren angewandt werden. Diese können jedoch erst am fertigen Bauteil angewandt werden. Es hat sich nun herausgestellt, wie es auf der rechten Seite der Figuren 2a und 2b dargestellt ist, dass ein Oberflächenbild 8, das durch die Kamera 10, ggf. unterstützt durch eine Laserlichtquelle 32, die zusammen die Kameravorrichtung 40 ergeben, aufgenommen ist, Rückschlüsse auf das Porenbild der obersten Schicht 4 bzw. 4' zulassen.

Dabei kommt die Erkenntnis zum Tragen, dass die Poren 64, die insbesondere mit Gas, beispielsweise Schutzgas oder aber auch Luft, gefüllt sind, mit Kavitäten 52 an der Oberfläche 14 der ersten Materialschicht 4, 4' korrelieren. Wird die Schicht 4 bzw. 4' in prozesstechnischer Sicht optimalerweise aufgebracht, so treten die Gaseinschlüsse, die Poren 64 bilden könnten, an der Oberfläche 14 aus. Dadurch bilden sich Oberflächenrauigkeiten in Form von Kavitäten 52, beispielsweise Krater oder andere Arten von Rauigkeiten. Das heißt, wenn die Oberfläche 14' mit einer höheren Anzahl an Kavitäten 52 belegt ist, lässt dies darauf schließen, dass die darunterliegende Materialschicht 4 weniger Poren enthält als eine Oberfläche 8 mit weniger Kavitäten 52. Durch eine Vielzahl von Untersuchungen lässt sich somit ein Rauigkeitskennwert X bestimmen, der insbesondere durch verschiedene computerunterstützte Verfahren festgelegt werden kann. Dabei handelt es sich in der Regel nicht um eine reine natürliche Zahl, sondern um eine komplexe Bewertung von Grau- bzw. Schwarzwerten der betrachteten Oberfläche 14 bzw. des Oberflächenbildes 8. Dabei ist beispielsweise in einer Bildauswertevorrichtung ein Rauigkeitsgrenzwert R hinterlegt, der mit dem in situ ermittelten Rauigkeitswert X verglichen wird. Der Rauigkeitswert X ist umso höher, je mehr Kavitäten an der Oberfläche 8 vorhanden sind bzw. ermittelt werden.

Eine Anfertigung einer Vielzahl von Querschnitten durch Werkstücke 2 führt zu dem Rauigkeitsgrenzwert R, der mit einer Anzahl und Struktur von Kavitäten 52 korreliert, bei dem die Porendichte, also die Anzahl der Poren 64 bzw. 64', in der ersten Materialschicht 4 bzw. 4' gerade noch akzeptabel ist. Liegt also der bestimmte Rauigkeitswert X oberhalb dieses Rauigkeitsgrenzwertes R, so ist zwar die Oberfläche 8 mit einer Vielzahl von Kavitäten durchsetzt, die darunterliegende Materialschicht 4 weist jedoch ausreichend wenig Poren 64 auf, um eine entsprechende Materialqualität des gesamten Werkstücks 2 bzw. 2' zu gewährleisten. In diesem Fall kann eine weitere Auftragsschritt zur Auftragung einer weiteren Materialschicht auf die Materialschicht 4 freigegeben werden.

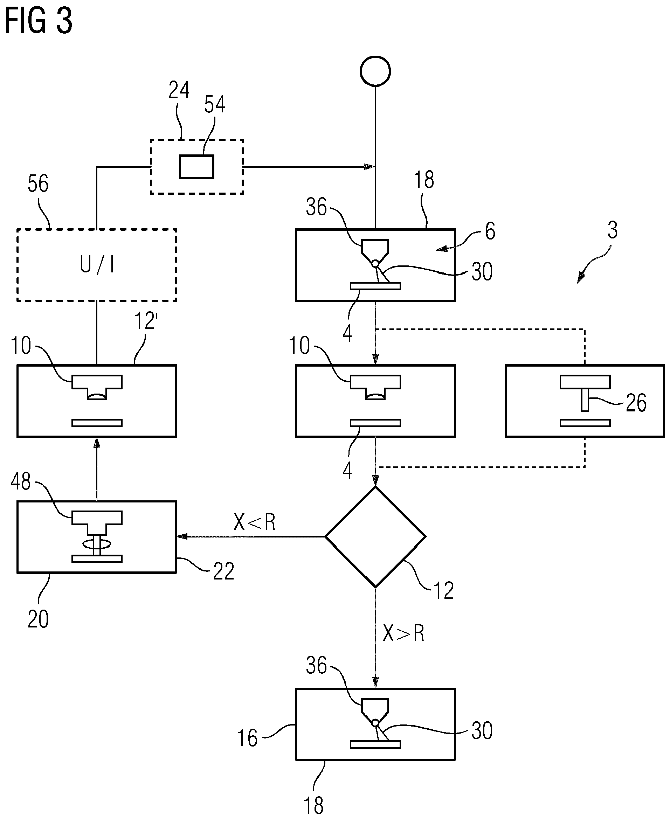

In Figur 3 ist der beschriebene Prozess schematisch in einem Prozessschaubild noch ein weiteres Mal veranschaulicht. Ausgehend von einem Startzustand (Kreis oben) wird zunächst mittels eines ersten Auftragungsschrittes 6, der in Form eines Lichtbogendrahtschweißprozesses 18 ausgestaltet ist, mittels einer Lichtbogendrahtschweißvorrichtung 36 eine erste Materialschicht 4 erzeugt. Dabei wird bevorzugt unmittelbar nach dem Erstarren oder während des Erstarrens mittels einer Kamera 10 die Oberfläche 14 entsprechend der bereits bezüglich Figur 2 beschriebenen Vorgehensweise untersucht.

Das durch die Kamera 10 aufgenommene Oberflächenbild 8 wird mithilfe eines Bildanalyseprozesses 12 entsprechend untersucht. Wie bereits erwähnt, korreliert die Oberflächenrauigkeit mit der in der Schicht 4 vorliegenden Porosität. Somit wird mittels einer Bildauswertungsvorrichtung 44 ein Rauigkeitswert X bestimmt. Dieser wird im Weiteren mit einem gespeicherten Rauigkeitsgrenzwert R verglichen. Wenn der Rauigkeitswert X kleiner ist als der Rauigkeitsgrenzwert R, also weniger Kavitäten und weniger Oberflächenrauigkeit auf der Oberfläche 8 vorliegt, so ist auf eine schlechte Qualität bezüglich Porosität in der Schicht 4 zu schließen. Daraufhin wird diese zumindest teilweise wieder in einem mechanischen Abtragungsprozess 22 im Rahmen einer Prozesskorrekturmaßnahme 20 abgetragen. Hierzu wird beispielsweise eine Fräsvorrichtung 48 angewandt. Es folgt ein weiterer Untersuchungsschritt der nun entstandenen neuen Oberfläche des Werkstücks 2, und es folgen ggf. weitere Prozesskorrekturmaßnahmen 20 in Form von Regelungen einer Prozessspannung bzw. eines Prozessstromes mittels einer Spannungs- und/oder Stromregelungsvorrichtung 56 56. Hierbei wird insbesondere eine Lichtbogenspannung U, die die Intensität eines Lichtbogens 30 beeinflusst, geregelt. Ferner ist es möglich, Anpassungen des Schutzgasstromes 24 mittels einer Schutzgasregelvorrichtung 54 vorzunehmen.

Beide dieser beschriebenen Parameter, also die Lichtbogenspannung U bzw. ein Lichtbogenstrom I und der Schutzgasstrom 24, können die Porosität und die Oberflächeneigenschaften, insbesondere auch die Oxidation an der Oberfläche 14 beeinflussen.

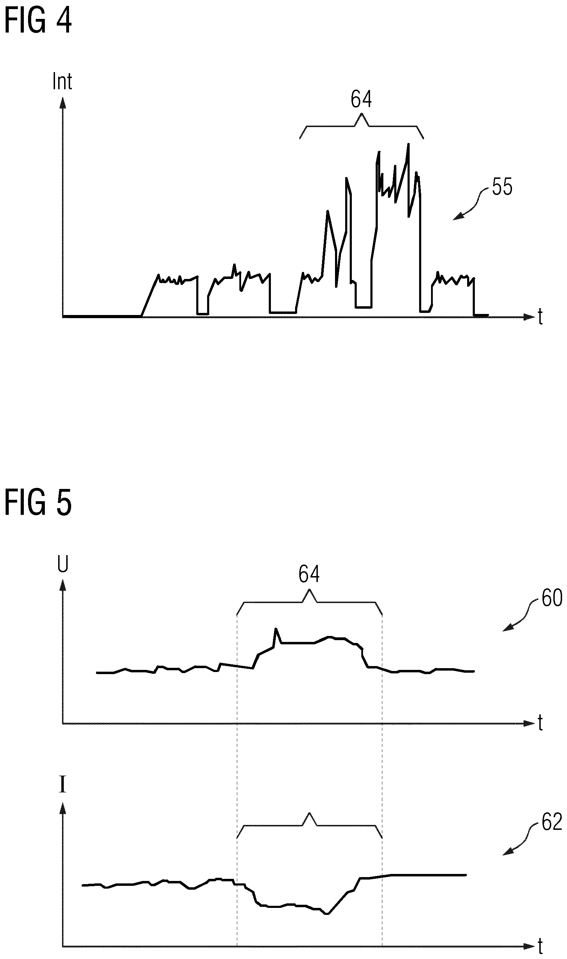

Insbesondere die Oxidation an der Oberfläche 14 kann in vorteilhafter Weise neben der Kameravorrichtung 40 bzw. der Kamera 10 auch durch ein Spektrometer 26, das hier schematisch dargestellt ist, ermittelt werden (vgl. Figur 4). Wenn die Regelmaßnahmen vorgenommen worden sind, also der Schutzgasstrom 24 bzw. die Spannung U und der Strom I des Lichtbogens 30 angepasst wurden, kann die erste Materialschicht 4 erneut aufgetragen werden, wie dies in dem Kreislauf gemäß Figur 3 dargestellt ist.

In dem Fall, dass der Rauigkeitswert X größer ist als der Rauigkeitsgrenzwert R, erfolgt eine Freigabe für einen weiteren Auftragungsschritt 16 mittels des beschriebenen Lichtbogendrahtschweißprozesses 18. Auf diese Weise wird bei optimalen Prozessbedingungen eine Mehrzahl weiterer Prozessschritte 16 durchgeführt, bis das Werkstück 2 seine entsprechende Kontur angenommen hat und fertiggestellt ist.

Im Weiteren soll noch auf mögliche Prozesskorrekturmaßnahmen 20 eingegangen werden, die im Gegensatz zum Abtragungsprozess 22 Steuermaßnahmen sind. Zum einen wird gemäß Figur 4 in vorteilhafter Weise ein Spektrometer 26 eingesetzt, das ebenfalls die Oberfläche 14 der Schicht 4 überwacht.

Das Spektrometer 26 liefert ein Spektrogramm, das in rein schematischer Form in Figur 4 abgebildet ist. Auf der Y-Achse ist dabei die Intensität Int aufgetragen, auf der X-Achse die Zeit t. Im Verlauf des Auftrags treten hierbei bei einer Prozessstörung, beispielsweise bei einer Oxidationsphase 64, deutlich höhere Intensitäten Int im Spektrum auf. Durch diese Information können ebenfalls wie bereits beschrieben an den Prozessparametern, nämlich dem Schutzgasstrom 24 und dem Lichtbogenstrom I bzw. der Lichtbogenspannung U, Anpassungen vorgenommen werden. Diese Unregelmäßigkeiten, die sich auf Oxidationsprozesse 64 zurückführen lassen können, sind auch in Figur 5 zu erkennen, indem die bereits genannte Lichtbogenspannung U und der Lichtbogenstrom I aufgezeigt sind. Dabei handelt es im oberen Teil der Figur 5 um den Spannungsverlauf 60, im unteren Bereich um den Stromverlauf 62. Die Spannung U erhöht sich bei auftretender Oxidation im Bereich 64, wogegen die Stromstärke I hierbei sinkt. Auch diese Prozessparameter können für die Regelung und für die Qualitätssicherung des Produktionsprozesses herangezogen werden.

### Bezugszeichenliste

- 2: Werkstück
- 3: Additiver Fertigungsprozess
- 4: erste Materialschicht
- 6: erster Auftragsschritt
- 8: Oberflächenbild
- 10: Kamera
- 12: Bildanalyseprozess
- X: Rauigkeitskennwert
- 14: Oberfläche
- R: Rauigkeitsgrenzwert
- 16: zweiter Auftragsschritt
- 18: Lichtbogendrahtspitzprozess
- 20: Prozesskorrekturmaßnahme
- 22: mechanische Abtragung
- 24: Anpassung Schutzgasstrom
- 26: Spektrometer
- U: Prozessspannung
- 30: Schweißlichtbogen
- 32: Laserlichtquelle
- 34: Lichtbogendrahtspitzroboter
- 35: Roboterarm
- 36: LDS Vorrichtung
- 38: LDS Spritzdüse
- 40: Kameravorrichtung
- 42: Wirkbereich Spritzdüse
- 44: Bildauswertungsvorrichtung
- 46: Steuervorrichtung
- 48: Materialabtragungsvorrichtung
- 50: Werktisch
- 52: Kavitäten
- 54: Schutzgasregelvorrichtung
- 56: Spannungsregelvorrichtung
- 58: Spektrogramm
- Int: Intensität
- 60: Spannungsverlauf
- 62: Stromverlauf
- 64: Oxidationsphasen
- 66: Poren
- 68: Fräskopf

## Patentansprüche

1. Verfahren zu Herstellung eines Werkstückes (2) mittels eines additiven Fertigungsprozesses (3), umfassend folgende Schritte:
- Erzeugen einer ersten Materialschicht aus einem Fertigungsmaterial in einem ersten Auftragsschritt (6),
- Aufnahme eines Oberflächenbildes (8, 8') der Materialschicht mittels einer Kamera (10),
- Durchführung einer Bildanalyse (12) des Oberflächenbildes (8, 8') und Bestimmung eines Rauigkeitskennwert (X) der Oberfläche (14),
- Abgleich des bestimmten Rauigkeitskennwerts (X) mit einem gespeicherten Rauigkeitsgrenzwert (R),
- Freigabe eines zweiten Auftragsschritts (16), wenn der bestimmte Rauigkeitskennwert (X) den gespeicherten Rauigkeitsgrenzwert (R) überschreitet.

2. Verfahren nach Anspruch 1, **dadurch gekennzeichnet, dass** der additive Fertigungsprozess (28) ein Lichtbogendrahtschweiß-Prozess (18) ist.

3. Verfahren nach Anspruch 1 oder 2, **dadurch gekennzeichnet, dass** bei Unterschreiten des Rauigkeitsgrenzwertes (R) eine Prozesskorrekturmaßnahme (20) durchgeführt wird.

4. Verfahren nach Anspruch 3, **dadurch gekennzeichnet, dass** die Prozesskorrekturmaßnahme (20) eine zumindest teilweise mechanische Abtragung (22) der ersten Materialschicht (4) umfasst.

5. Verfahren nach Anspruch 3, **dadurch gekennzeichnet, dass** die Prozesskorrekturmaßnahme (20) eine Anpassung eines Schutzgasstrom (24) umfasst.

6. Verfahren nach einem der vorhergehenden Ansprüche, **dadurch gekennzeichnet, dass** Oxidationsvorgänge an einer Oberfläche (14) der ersten Materialschicht (4) mittels eines Spektrometers (26) überwacht werden.

7. Verfahren nach einem der Ansprüche 3 bis 6, **dadurch gekennzeichnet, dass** die Prozesskorrekturmaßnahme (20) eine Anpassung einer Prozessspannung (U) am additiven Fertigungsprozess (3) ist.

8. Verfahren nach Anspruch 7, **dadurch gekennzeichnet, dass** die Prozesskorrekturmaßnahme (20) eine Anpassung der Prozessspannung (U) eines Schweißlichtbogens (30) ist.

9. Verfahren nach einem der Ansprüchen 2 bis 8, **dadurch gekennzeichnet, dass** mittels einer Laser-Lichtquelle (32) eine Beleuchtungszeit der Oberfläche (14) der Materialschicht (4) und eine Verschlusszeit der Kamera (10) in der Art gesteuert wird, dass eine Beleuchtung der Oberfläche (14) durch den Schweißlichtbogen (30) kompensiert wird.

10. Vorrichtung zur Herstellung eines Werkstücks (2) mittels eines additiven Lichtbogendrahtschweißprozesses (3), umfassend
- einen Lichtbogendrahtschweiß-Roboter (34), mit einem Roboterarm (36)
- an dem eine Lichtbogendrahtschweiß-Vorrichtung (36) mit einer Schweißdüse (38) montiert ist und
- eine Kameravorrichtung (40) mit einer Kamera (10) die ebenfalls an dem Roboterarm (36) angebracht ist, die bezüglich der Lichtbogendrahtschweiß-Vorrichtung (18) simultan verfahrbar ist,
wobei die Kamera (10) dabei auf eine Position gerichtet ist, die mit einem Wirkbereich (42) der Schweißdüse (38) zusammenfällt und
- eine Bildauswertungsvorrichtung (44) zur in situ Auswertung von von der Kamera (10) aufgenommenen Oberflächenbildern (8, 8') des Werkstücks (2) und
- mit einer Steuervorrichtung (46), die mit der Bildauswertevorrichtung (44) in Verbindung steht.

11. Vorrichtung nach Anspruch 10, **dadurch gekennzeichnet, dass** eine Materialabtragungsvorrichtung (48) zur Abtragung (22) zumindest Teile einer Materialschicht (4) vorgesehen ist.

12. Vorrichtung nach Anspruch 10 oder 11, **dadurch gekennzeichnet, dass** an der Lichtbogendrahtschweißvorrichtung eine Spannungsmessvorrichtung und eine Spannungsregelvorrichtung (56) zur Messung und Regelung einer Lichtbogenspannung (U) vorgesehen ist, die in Verbindung mit der Steuervorrichtung (46) stehen.

13. Vorrichtung nach einem der Ansprüche 10 bis 12 **dadurch gekennzeichnet, dass** die Lichtbogendrahtschweißvorrichtung (36) eine Schutzgasregelvorrichtung (54) aufweist, die in Verbindung mit der Steuervorrichtung (46) steht.

14. Vorrichtung nach Anspruch 12 oder 13, **dadurch gekennzeichnet, dass** anhand der von der Bildauswertevorrichtung (44) an die Steuervorrichtung (46) übermittelten Daten ein Steuersignal an die Schutzgasregelvorrichtung (54) und/oder die Spannungsregelvorrichtung (56) ergeht.

15. Vorrichtung nach einem der Ansprüche 10 bis 14, **dadurch gekennzeichnet, dass** die Kameravorrichtung (40) neben der Kamera eine Laser-Lichtquelle (32) aufweist, wobei ein elektrischer Verschluss der Kamera (10) mit einem elektrischen Verschluss der Laser-Lichtquelle (32) in der Art synchronisiert sind, dass eine Belichtungszeit von weniger als 1 10⁻⁵ s auftritt.
